# EUROPÄISCHE PATENTSCHRIFT

(11) **EP 3 231 646 B1**
(45) Veröffentlichungstag und Bekanntmachung des Hinweises auf die Patenterteilung: **21.11.2018**
(21) Anmeldenummer: 17164889.2
(22) Anmeldetag: 05.04.2017
(51) Int. Cl.: B60H 1/00, F25B 45/00

(54) **VERFAHREN UND VORRICHTUNG ZUR BEFÜLLUNG EINER KLIMAANLAGE MIT KÄLTEMITTEL**
METHOD AND DEVICE FOR FILLING AN AIR CONDITIONING UNIT WITH REFRIGERANT
PROCÉDÉ ET DISPOSITIF DE REMPLISSAGE D'UNE INSTALLATION DE CLIMATISATION AVEC UN RÉFRIGÉRANT

(30) Priorität: 13.04.2016 AT 503182016
(43) Veröffentlichungstag der Anmeldung: 18.10.2017
(73) Patentinhaber: AVL DiTest GmbH, 8020 Graz (AT)
(72) Erfinder: Kerschenbauer, Peter, 8250 Vorau (AT); Kohl, Anton, 8263 Großwilfersdorf (AT)
(74) Vertreter: Patentanwälte Pinter & Weiss OG

(56) Entgegenhaltungen:
- EP-A1- 1 213 549
- JP-A- 2009 243 882
- JP-A- 2011 012 958

## Beschreibung

Die Erfindung betrifft ein Verfahren zum Befüllen einer Klimaanlage mit einer definierten Füllmenge an Kältemittel aus einem Vorratsspeicher über ein Befüllleitungssystem, sowie eine Vorrichtung zum Befüllen einer Klimaanlage mit einer definierten Füllmenge an Kältemittel aus einem Vorratsspeicher über ein Befüllleitungssystem, wobei die Vorrichtung eine Befülleinheit mit einer Wägezelle zur Ermittlung der abgegebenen Menge an Kältemittel aufweist.

Bei einem Service für eine Klimaanlage wird diese an ein Klimaservicegerät angeschlossen, welches die Leitungen und Volumen der Klimaanlage zuerst vollständig entleert und dann den erforderlichen Bedarf an neuem Kältemittel und Öl in die Anlage einfüllt. Beim Schritt des Entleerens wird das Kältemittel zuerst abgelassen und dann mithilfe eines Kompressors und/oder einer Vakuumpumpe abgesaugt. Danach wird die Klimaanlage aus einem Vorratsspeicher mit neuem oder rückgewonnenem Kältemittel befüllt.

Klimaservicegeräte bestimmen dabei die Füllmenge des Kältemittels mittels einer Wägezelle. Es wird einfach die Masse des Vorratsspeichers inkl. darin befindliches Kältemittel gemessen. Nach dem Öffnen der Ventile und dem damit einhergehenden Einströmen des Kältemittels in die evakuierte Klimaanlage wird die Veränderung der Masse laufend gemessen. Wenn der entsprechende Wert inkl. einer berechneten Kompensationsmenge, die das im Füllschlauch und im Servicegerät befindliche Kältemittel repräsentiert, erreicht ist, wird das Füllventil geschlossen.

Solche Füllvorgänge sind beispielsweise in DE 202008003123 U1 oder DE 102009054436 A1 beschrieben. Ein Verfahren gemäß Oberbegriff des Anspruchs 1 ist aus der EP 1 213 549 A1 bekannt.

Insbesondere für Klimaanlagen, die R744 bzw. Kohlendioxid als Kältemittel verwenden, kann es jedoch schwierig sein, die genaue Füllmenge des nachgefüllten Kältemittels zu bestimmen. Dies liegt daran, dass sich die Zustände des Kältemittels während des Einströmens des Kältemittels vom Vorratsbehälter in die Klimaanlage stark ändern können, wobei insbesondere das Verhältnis von flüssiger zu gasförmiger Phase schwierig zu handhaben ist.

Die tatsächliche Kompensationsmenge, das ist die Menge an Kältemittel, die zwar von der Wägezelle als Teil der abgegebenen Menge ermittelt wurde, die jedoch nach dem Befüllvorgang in den Leitungen des Servicegeräts verbleibt, kann oft nicht ausreichend genau ermittelt werden, da sich flüssiges Kältemittel im Füllschlauch sammeln kann.

Wenn zum Beispiel eine Menge von 500 g R744 in die Klimaanlage eines KFZ gefüllt werden soll, muss man aus dem Vorratsbehälter 500 g + eine Kompensationsmenge, welche in dem Klimaservicegerät verbleibt, entnehmen. Die Kompensationsmenge entspricht dabei dem Inhalt in den Leitungen und Schläuchen des Klimaservicegeräts, das heißt der Menge an Kältemittel, die nicht im Fahrzeug ankommt.

Der Begriff "Menge" kann sich, je nach Zusammenhang, auf die Masse oder das Volumen beziehen, wobei im Zusammenhang mit Füllmengen im Allgemeinen die Masse angegeben wird, da diese Angabe unabhängig von etwaigen Zustandsänderungen eindeutig definiert ist.

Wenn eine Mischung aus flüssigem und gasförmigem Kältemittel (insbesondere CO₂ in einem Aggregatzustand im Zweiphasengebiet) oder nur flüssiges Kältemittel eingefüllt wird, kann nicht genau bestimmt werden, welcher Prozentanteil der tatsächlichen Kompensationsmenge im Gerät im flüssigen, und wieviel im gasförmigen Zustand vorliegen, da ja durch das zusätzliche Volumen in der Klimaanlage ein Teil des Kältemittels verdampft und ein Teil flüssig vorliegt. Somit sammelt sich an den tieferliegenden Stellen im Klimaservicegerät oder im Füllschlauch flüssiges Kältemittel an und an höherliegenden Stellen liegt das Kältemittel im gasförmigen Zustand vor. Es ist mit herkömmlichen Servicegeräten und Verfahren derzeit nicht ermittelbar, ob die tatsächlich in den Leitungen des Servicegeräts vorhandene Kältemittelmenge (die tatsächliche Kompensationsmenge) mit der berechneten Kompensationsmenge übereinstimmt. Zahlreiche Faktoren können die tatsächliche Kompensationsmenge beeinflussen, etwa wie der Füllschlauch zur Klimaanlage verläuft, ob er also am Boden liegt oder ob sich das Fahrzeug mit der Klimaanlage auf einer Hebebühne befindet, wie schnell das CO₂ einströmt, etc.

Da aber die tatsächliche Kompensationsmenge nicht eindeutig ermittelt werden kann, ist auch die tatsächlich in die Klimaanlage gefüllte Menge an Kältemittel (d.h. die Füllmenge) nicht bekannt. In manchen Fällen kann daher nicht mehr gewährleistet werden, dass die Füllmenge nach dem Klimaservice den Herstellervorgaben entspricht.

Die möglichen Auswirkungen des Aggregatzustands des Kältemittels auf die Kompensationsmenge kann anhand eines Beispiels verdeutlicht werden: Bei beispielsweise 60 bar beträgt die Dichte von flüssigem CO₂ 751 kg/m³, von gasförmigem CO₂ beträgt sie 211 kg/m³. Das entspricht einem Faktor > 3,5.

In einer Versuchsreihe wurden mit einer beispielhaften und für die Praxis repräsentativen Leitungslänge für die tatsächliche Kompensationsmenge bei unterschiedlichen Bedingungen Werte in einem Bereich zwischen 50 g und 150 g gemessen.

Die berechneten Massenwerte in Abhängigkeit des Mischungsverhältnisses von flüssigem zu gasförmigem CO₂, ausgehend von einem Leitungsvolumen, in dem sich bei 60 bar 50 g gasförmiges CO₂ befinden, sind in der untenstehenden Tabelle 1 dargestellt.

**Tabelle 1**

| **Anteil Flüssig (Gew.-%)** | **Anteil gasförmig (Gew.-%)** | **Masse (g)** |
|---|---|---|
| 0 | 100 | 50 |
| 3 | 97 | 53,8 |
| 6 | 94 | 57,6 |
| 10 | 90 | 62,8 |
| 20 | 80 | 75,6 |
| 40 | 60 | 101,2 |
| 60 | 40 | 126,8 |
| 80 | 20 | 152,4 |
| 100 | 0 | 178 |

Wie man aus dem obigen Beispiel erkennt, ist es zur genauen Ermittlung der tatsächlichen Kompensationsmenge (bzw. der tatsächlichen Füllmenge) zum einen essentiell, die Leitungslängen und -querschnitte zu optimieren und zum anderen ist es nötig, den Zustand des CO₂ sehr genau zu kennen. Dies ist mit herkömmlichen Klimaservicegeräten und Füllverfahren derzeit nur schwierig oder gar nicht umsetzbar.

Es ist ein Ziel der gegenständlichen Erfindung, Verfahren und Vorrichtungen bereitzustellen, die die Möglichkeiten einer genauen Ermittlung der tatsächlichen Füllmenge eines Kältemittels, insbesondere des Kältemittels R744 bzw. CO₂, erheblich verbessern.

Erfindungsgemäß werden diese und weitere Ziele der gegenständlichen Erfindung durch ein Verfahren der eingangs genannten Art erzielt, wobei das Kältemittel vor dem Befüllen in einem Zwischenbehälter auf einen Ausgangswert konditioniert wird, wobei das Kältemittel ausgehend von diesem Ausgangswert über das Befüllleitungssystem in die evakuierte Klimaanlage einströmen gelassen wird und wobei zumindest bei Erreichen eines Aggregatzustands des Kältemittels im Zweiphasengebiet das weitere Einströmen zum Erreichen einer entlang der oberen Grenzlinie des Zweiphasengebiets im Wesentlichen stufenförmig verlaufenden Änderung des Aggregatzustandes intervallweise unterbrochen wird. Diese intervallweise Unterbrechen führen zu einer wechselnden Abfolge von Unterbrechungen und Einströmtakten, wodurch sich das Ansammeln von flüssigem Kältemittel im Befüllleitungssystem vollständig oder nahezu vollständig vermeiden lässt: Solange das einströmende Kältemittel überkritisch ist, kann sich keine flüssige Phase des Kältemittels bilden. Da das überkritische Kältemittel dabei sehr schnell durch die Leitungen in die Klimaanlage strömt, würde gegebenenfalls sich bildendes flüssiges Kältemittel auch von der Strömung mitgerissen und in die Klimaanlage gespült werden. Erst wenn das Zweiphasengebiet erreicht wird, ist ein Ansammeln von flüssigem Kältemittel im Befüllleitungssystem zu befürchten. Da der Druck geringer ist als im überkritischen Bereich sinkt auch die Strömungsgeschwindigkeit, sodass sich auch größere Mengen an Kältemittel in dem Befüllleitungssystem bilden und dort ansammeln können. Dieser Effekt wird bei größeren Leitungsquerschnitten (die ansonsten vorteilhaft sind) verstärkt. Die intervallweisen Unterbrechungen verhindern jedoch die Bildung von flüssigem Kältemittel im Befüllleitungssystem, da das Kältemittel während der Unterbrechungen einerseits eine Phasentrennung durchläuft, wobei sich flüssiges Kältemittel im Zwischenbehälter absetzt, und zumindest im Bereich der gasförmigen Entnahme des Zwischenbehälters bereits nach einer kurzen Unterbrechung nur mehr gasförmiges Kältemittel vorliegt. Andererseits kann sich das Kältemittel zumindest lokal erwärmen, wobei Kältemittel verdampft. Die dabei bewirkte Änderung im p-h-Diagramm entspricht einer horizontalen Linie in dem Zweiphasenbereich in Richtung der oberen Grenzlinie. Eine Abfolge an intervallweisen Unterbrechungen bewirkt den erfindungsgemäß erwünschten stufenförmigen Verlauf. Bei jedem Einströmtakt wird Flüssigkeit, die sich gegebenenfalls dennoch im Befüllleitungssystem gebildet haben könnte, vom neu einströmenden Kältemittel entweder verdampft oder mitgerissen. Da sich der Aggregatzustand immer nahe an der oberen Grenzlinie befindet, kann sich nur wenig neues flüssiges Kältemittel bilden. Der Zwischenbehälter kann vorzugsweise vor dem einströmen Lassen mittels eines Kompressors mit Kältemittel aus einem Vorratsbehälter befüllt und auf einen gewünschten Druck bzw. eine gewünschte Temperatur konditioniert werden. In einer weiteren Ausführungsform kann die Konditionierung direkt im Vorratsbehälter erfolgen, wobei in diesem Fall der Zwischenbehälter und der Vorratsbehälter dieselben Teile sind.

Der Ausgangswert liegt vorzugsweise in einem überkritischen Bereich. Dadurch kann bereits vor Erreichen des Zweiphasengebiets eine große Menge an Kältemittel einströmen gelassen werden.

In einer vorteilhaften Ausführungsform kann das Kältemittel zumindest nach Erreichen des Zweiphasengebiets über ein Einlassventil für eine gasförmige Entnahme des Kältemittels aus dem Zwischenbehälter in die Klimaanlage einströmen gelassen werden. Das verringert die mögliche Menge an flüssigem Kältemittel, die sich im Befüllleitungssystem befinden kann.

In vorteilhafter Weise ermöglicht die Dauer der Unterbrechungen eine effektive Phasentrennung im Zwischenbehälter. Dadurch können sich im Befüllleitungssystem im nachfolgenden Einströmschritt keine großen Mengen an Kondensat bilden.

Die einfachste Weise der Regelung der intervallweisen Unterbrechungen kann erzielt werden, indem die Unterbrechungen gemäß einer regelmäßigen Taktung erfolgen. Dabei kann auch am Anfang, im überkritischen Bereich, das Einströmen mit derselben Taktung intervallweise unterbrochen werden. Dies bringt zwar während des überkritischen Einströmens keinen Nutzen, wenn aber die Regelung der Taktung ohne Sensorik nur über fixe Taktzeiten geregelt werden soll, kann dieselbe vorgegebene Taktung durchgängig verwendet werden, ohne dass der Zeitpunkt des Eintretens in das Zweiphasengebiet ermittelt werden müsste.

Bevorzugter Weise können zur Ermittlung von Unterbrechungsintervallen ein Volumen des Befüllleitungssystems, ein Innendurchmesser von Leitungen des Befüllleitungssystems ein Volumen der zu befüllenden Klimaanlage, die definierte Füllmenge der Klimaanlage, eine Umgebungstemperatur und/oder ein Wert für eine Einfüllgeschwindigkeit berücksichtigt werden. Dadurch lässt sich die jeweilige Abfüllstrategie genau auf die Klimaanlage und die weiteren jeweils vorliegenden Bedingungen abstimmen. Geringe Durchmesser der Leitungen sind dahingehend vorteilhaft, dass sich nur geringe Mengen an Kältemittel im Befüllleitungssystem befinden können. Weiters stellt eine verhältnismäßig große Masse der Leitungen des Befüllleitungssystems einen Wärmespeicher dar, und kann so zum raschen Erwärmen und verdampfen von kühlem Kältemittel im System beitragen.

In vorteilhafter Weise kann das Kältemittel in dem Zwischenbehälter während der Unterbrechungen über eine Heizeinheit erwärmt werden. Dadurch kann der Befüllvorgang beschleunigt werden. Über eine Heizeinheit ist es auch möglich, während der Unterbrechung die gesamte Menge an Kühlmittel im Zwischenbehälter zu verdampfen, sodass der Stufenförmige Verlauf des Aggregatzustandes gegebenenfalls auch in das Gasgebiet hinein verlängert werden könnte.

Die Vorrichtung der eingangs genannten Art zum Befüllen einer Klimaanlage ist erfindungsgemäß dadurch gekennzeichnet, dass sie eine Steuereinheit zur Steuerung von zumindest einem Einlassventil, über welches das Kältemittel beim Befüllen der Klimaanlage strömt, aufweist, wobei die Steuereinheit ausgebildet ist, um das Einströmen des Kältemittels zumindest nach Erreichen eines Aggregatzustands des Kältemittels im Zweiphasengebiet zum Erzielen einer entlang der oberen Grenzlinie des Zweiphasengebiets im Wesentlichen stufenförmig verlaufenden Änderung des Aggregatzustandes intervallweise zu unterbrechen. Diese Vorrichtung erlaubt die vorteilhafte Umsetzung des erfindungsgemäßen Verfahrens.

In vorteilhafter Weise kann die Befülleinheit einen Kompressor und einen Zwischenbehälter aufweisen. Der jeweilige Aggregatzustand des Kältemittels im Zwischenbehälter kann dadurch beim Befüllen mit dem Kompressor eingestellt werden.

In einer bevorzugten Ausführungsform kann der Kompressor angeordnet sein, um Kältemittel von dem Vorratsspeicher in den Zwischenbehälter zu befördern, wobei die Wägezelle zur Wägung der im Zwischenbehälter befindlichen Menge an Kältemittel angeordnet ist. Die Verwendung von Zwischenbehältern erlaubt einerseits das Einstellen und Überwachen eines wohldefinierten Aggregatzustandes vor dem Befüllvorgang und während des Befüllvorgangs. Die Zwischenbehälter können erheblich kleiner ausgeführt sein, als herkömmliche Vorratsbehälter, wobei jeder Zwischenbehälter mit einer verhältnismäßig einfachen Wägezelle ausgestattet sein kann, die dennoch einen größere Genauigkeit aufweist, als dies bei einer Wägezelle möglich ist, die für das Wägen von Vorratsbehältern üblicher Größe erforderlich sind. Andererseits können die Zwischenbehälter, beispielsweise hinsichtlich der Dichtungen oder der thermischen Isolierung, spezifisch für überkritisches Kältemittel ausgelegt sein, was bei normalen Vorratsbehältern üblicherweise nicht der Fall ist.

In weiteren vorteilhaften Ausführungsformen kann die Vorrichtung zumindest ein Einlassventil für eine gasförmige Entnahme von Kältemittel aufweisen. Weiters kann die Vorrichtung eine Vielzahl an gleichartigen oder unterschiedlichen Zwischenbehältern aufweisen.

In vorteilhafter Weise kann zumindest ein Zwischenbehälter eine Heizeinheit aufweisen. Die Heizeinheit erlaubt eine schnelle Konditionierung des Kältemittels im Zwischenbehälter und das Einstellen des gewünschten Ausgangswerts, etwa wenn der Zwischenbehälter nach dem Befüllen abgekühlt ist. Weiters kann das Kältemittel während der Unterbrechungen in dem Zwischenbehälter zusätzlich erwärmt werden.

In einer weiteren bevorzugten Ausführungsform kann die Heizeinheit auf einer induktiven Erwärmung der Behälterwand des Zwischenbehälters basieren. Dies stellt eine besonders einfache Form der Erwärmung dar und es ist möglich, standardmäßige Vorratsspeicher, die als solche über keine Heizeinheit verfügen, als Zwischenbehälter zu verwenden.

Die Erfindung umfasst weiters ein Klimaservicegerät zur Entleerung und Wiederbefüllung einer Klimaanlage mit Kältemittel, wobei das Klimaservicegerät einen Niederdruckanschluss und/oder einen Hochdruckanschluss, eine Ablasseinheit, und eine erfindungsgemäße Vorrichtung zum Befüllen der Klimaanlage aufweist. Mit solch einem Klimaservicegerät lässt sich ein vollständiges Klimaservice unter Verwendung des erfindungsgemäßen Verfahrens schnell, einfach und vollständig durchführen.

Mit Hilfe der Erfindung kann die ins Fahrzeug gefüllte Kältemittelmenge sehr genau bestimmt werden. Anstelle des eher ungenauen Verfahrens mit der großen Wägezelle für den Kältemittelspeicher, wie es aus dem Stand der Technik bekannt ist, kann das Kältemittel mit einer entsprechend genauen Wiegezelle (gegebenenfalls pro Zwischenbehälter) genauer gemessen werden. Außerdem kann durch das dezidierte Einfüllen von überkritischem oder gasförmigem Kältemittel, insbesondere CO₂, die Kompensationsmenge sehr viel genauer bestimmt werden, als dies bei einem Befüllen mit einer Mischung von flüssigem und gasförmigem Kältemittel möglich wäre.

Die gegenständliche Erfindung wird nachfolgend unter Bezugnahme auf die Figuren 1 bis 3 näher erläutert, die beispielhaft, schematisch und nicht einschränkend vorteilhafte Ausgestaltungen der Erfindung zeigen. Dabei zeigt
Fig.1 eine Schematisierte Darstellung der Befüllung einer Klimaanlage mittels einer Befülleinheit über ein Befüllleitungssystem;
Fig. 2 ein Schaltschema einer vorteilhaften Ausgestaltung der Erfindung und
Fig. 3 ein Zustandsdiagramm von R744, in dem ein beispielhafter Verlauf der Zustände des Kältemittels beim Einfüllen einer Klimaanlage dargestellt ist.

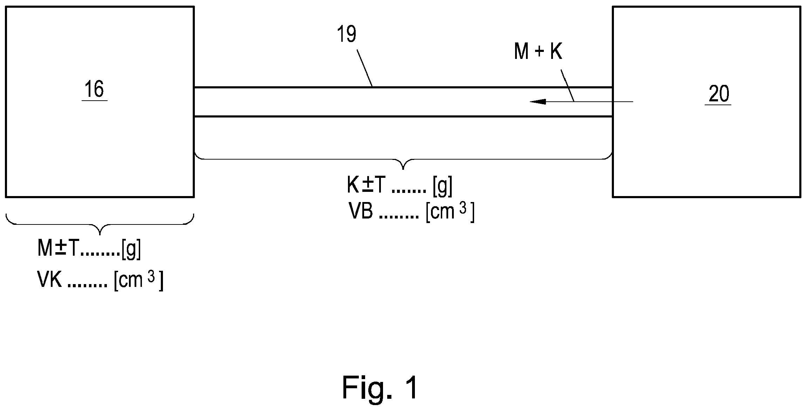

Zur Erläuterung der verwendeten Bezeichnungen zeigt Fig. 1 in einem blockartigen Diagramm einige wesentlichen Elemente, Parameter und Werte, die beim Befüllen einer Klimaanlage 16 zu berücksichtigen sind.

Die evakuierte Klimaanlage 16 wird mithilfe einer Befülleinheit 20 über ein Befüllleitungssystem 19 mit frischem Kältemittel befüllt. Die Klimaanlage 16 weist ein (mitunter nicht genau bekanntes) Volumen VK auf, wohingegen das Volumen VB des Befüllleitungssystems 19 bekannt ist. Die Befülleinheit 20 gibt beim Befüllen eine definierte Füllmenge M an Kältemittel zuzüglich einer Kompensationsmenge K ab, wobei diese abgegebene Menge M+K mithilfe einer oder mehrerer Wägezellen 21 (in Fig. 1 nicht dargestellt) sehr genau ermittelt werden kann.

Von der abgegebenen Menge M+K gelangt eine tatsächliche Füllmittelmenge M±T, die sich aus der definierten Füllmittelmenge M plus/minus einer Toleranzabweichung T zusammensetzt, in die Klimaanlage 16. Im Befüllleitungssystem 19 verbleibt somit eine tatsächliche Kompensationsmenge K±T, die sich aus einer berechneten Kompensationsmenge minus/plus der Toleranzabweichung T zusammensetzt.

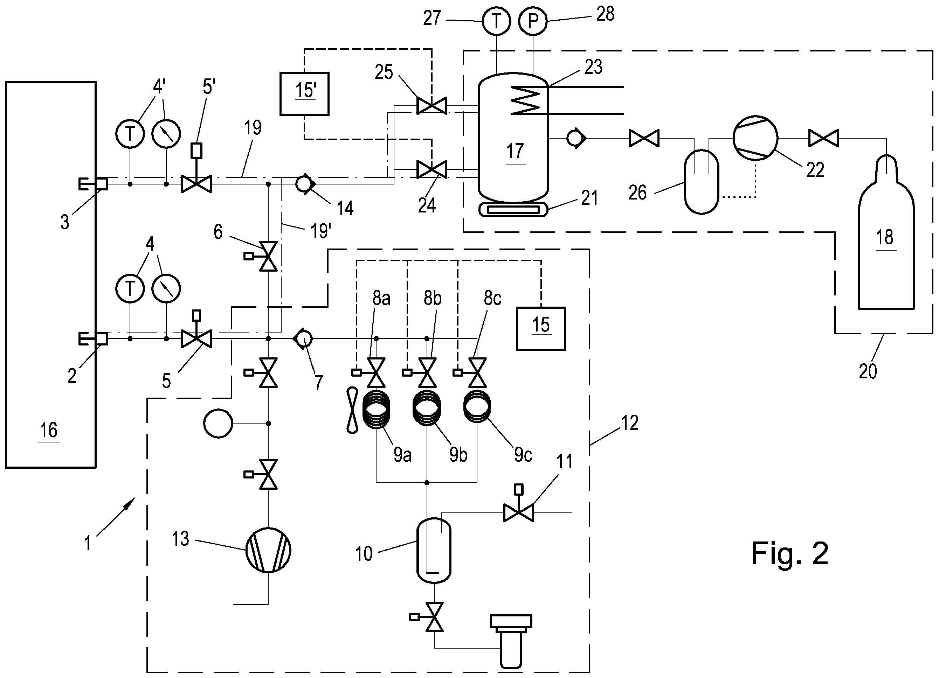

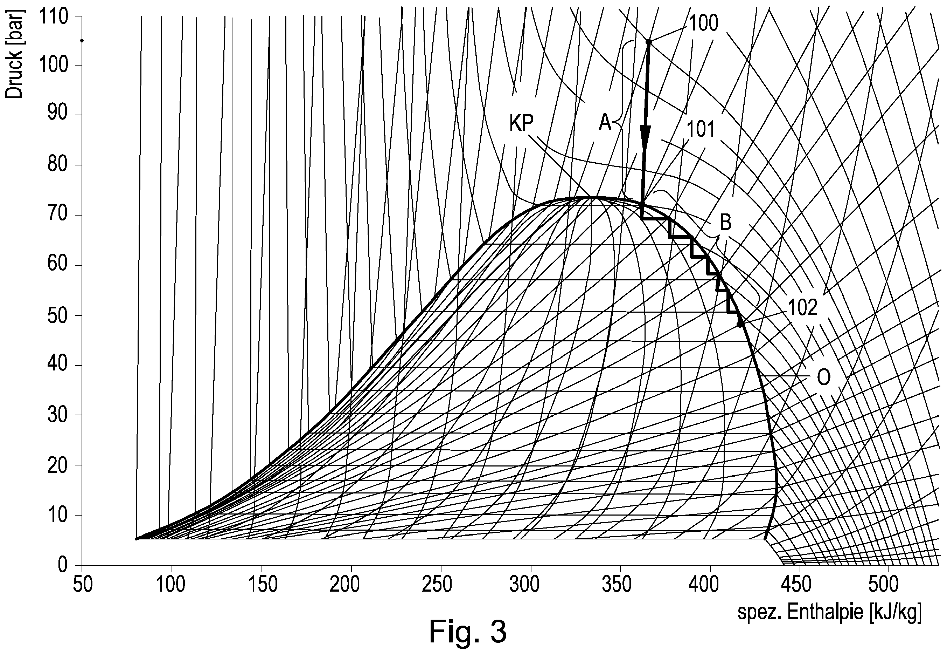

Die Aufgabe beim Befüllen liegt nun darin, sicherzustellen, dass der tatsächliche Wert der Toleranzabweichung T unter einem für die jeweilige Klimaanlage definierten Wert liegt. Diese Aufgabe kann beispielsweise mit der im Folgenden in Fig. 2 dargestellten Vorrichtung und dem untenstehend unter Bezugnahme auf Fig. 3 beispielhaft erläuterten Verfahren gelöst werden.

Bei einem Klimaanlagenservice wird das Klimaservicegerät der Fig. 2 über einen Niederdruckanschluss 2 an die Niederdruckseite und über einen Hochdruckanschluss 3 an die Hochdruckseite einer mit gebrauchtem Kältemittel gefüllten Klimaanlage 16 angeschlossen. Nach dem Anschließen können Temperatur und Druck des Kältemittels über Messgeräte 4, 4' ermittelt werden. Die Anschlussventile 5, 5' sind vorerst geschlossen. Die von den Anschlussventilen 5, 5' wegführenden Leitungen können über ein Verbindungsventil 6 zusammengeschaltet werden, etwa um ein Entleeren der Klimaanlage 16 über beide Anschlüsse 2, 3 gleichzeitig zu ermöglichen. Es ist jedoch auch möglich, die Klimaanlage 16 über nur einen einzigen Anschluss zu entleeren.

Zum Ablassen des Kältemittels wird entweder nur das Anschlussventil 5 auf der Niederdruckseite geöffnet, oder es werden das Verbindungsventil 6 und beide Anschlussventile 5, 5' auf Hochdruck- und Niederdruckseite 6 geöffnet, wobei das Kältemittel durch ein Ablass-Rückschlagventil 7 strömt und zu mehreren parallel zueinander angeordneten Ablass-Sperrventilen 8a, 8b, 8c gelangt, die über eine Steuereinheit 15 jeweils selektiv geöffnet oder geschlossen werden können. Die Steuereinheit 15 ist auch mit anderen Einheiten und Sensoren des Klimaservicegeräts 1 verbunden, wobei in Fig. 2 nur die Verbindungen zu den Ablass-Sperrventilen 8a, 8b, 8c schematische dargestellt sind. In Fig. 2 sind drei Ablass-Sperrventile 8a, 8b, 8c vorgesehen, die Vorrichtung kann jedoch auch mehr oder weniger Ablass-Sperrventile 8a, 8b, 8c aufweisen. Jedes Ablass-Sperrventil 8a, 8b, 8c führt zu einem Druck verringernden Organ 9a, 9b, 9c, das jeweils als Kapillarrohr-Wärmetauscher ausgebildet ist, wobei jedes der Druck verringernden Organe 9a, 9b, 9c unterschiedliche Strömungsbedingungen aufweist, insbesondere können Kapillarrohr-Wärmetauscher unterschiedliche Strömungsquerschnitte und/oder unterschiedliche Kapillarrohrlängen aufweisen. Es können auch alle Druck verringernden Organe die gleichen Strömungsbedingungen aufweisen, was jedoch die Anzahl der einstellbaren Ablassstufen verringert.

Die Ablassrate des Kältemittels kann nun durch selektives Öffnen und Schließen der Ablass-Sperrventile 8a, 8b, 8c geregelt werden, wobei mit den dargestellten drei Druck verringernden Organen 9a, 9b, 9c sieben unterschiedliche Öffnungskombinationen einstellbar sind.

Beispielhafte Ausführungsformen der Ablass-Sperrventile 8a, 8b, 8c und der der Druck verringernden Organe 9a, 9b, 9c sowie vorteilhafte Verfahren zum Ablassen des Kältemittels sind in der früheren Anmeldung AT 515240 A2 des Anmelders ausführlich beschrieben. Es wird davon ausgegangen, dass der Fachmann umfassende Kenntnisse von den in AT 515240 A2 offenbarten Vorrichtungen, Verfahren und Lehren hat. Daher wird im gegenständlichen Fall eine ausführliche Beschreibung dieser bekannten Elemente aus Gründen der Übersichtlichkeit ausgelassen.

Das im Ölabscheider 10 entnommene Öl wird über eine Wägevorrichtung gewogen, um die nachzufüllende Menge an Öl zu ermitteln.

Wenn der Druck in der Klimaanlage 16 auf den Umgebungsdruck abgesunken ist, werden die Ablass-Sperrventile 8a, 8b, 8c alle geschlossen, und die Klimaanlage 16 wird über eine Vakuumpumpe 13 vollständig entleert.

Anstelle der in Fig. 2 dargestellten Ablasseinheit 12 können auch andere Vorrichtungen und Verfahren zum Evakuieren einer Klimaanlage verwendet werden, wie etwa die in den vom gegenständlichen Anmelder stammenden Dokumenten AT 515239 A2, AT 514741 A2, AT 514742 A2 oder AT514924 A4 offenbarten Vorrichtungen und Verfahren.

Nach dem vollständigen Entleeren der Klimaanlage kann die Klimaanlage 16 mittels der Befülleinheit 20 über ein Einström-Rückschlagventil 14 mit neuem Kältemittel und frischem Öl befüllt werden. Da die Vorrichtungen zum Einfüllen von Frischöl dem Fachmann hinlänglich bekannt sind, wurde auf eine Darstellung und Beschreibung derselben verzichtet.

Die Befülleinheit 20 weist zum Zweck der Befüllung der Klimaanlage 16 mit Kältemittel einen Zwischenbehälter 17 auf, dessen Füllmenge mit einer Wägezelle 21 ermittelt werden kann. Der Zwischenbehälter 17 ist mit einer Heizeinheit 23 versehen. Zum Auffüllen des Zwischenbehälters 17 pumpt ein Kompressor 22 Kältemittel aus einem Vorratsspeicher 18 in den Zwischenbehälter 17, wobei das Kältemittel mithilfe eines Ölabscheiders 26 von mitgeführtem Kompressoröl befreit wird, bevor es in den Zwischenbehälter 17 gelangt. Der Kompressor 17 ist vorzugsweise in der Lage, das Kältemittel auf einen überkritischen Druck zu komprimieren, und der Zwischenbehälter 17 sowie die weiteren Leitungen, Ventile und Dichtungen sind ebenfalls für einen entsprechenden überkritischen Druck des Kältemittels ausgelegt.

Wenn eine ausreichende Menge an Kältemittel in den Zwischenbehälter 17 gepumpt und der für den Befüllvorgang gewählte Ausgangszustand (d.h. insbesondere der entsprechende Ausgangsdruck) erreicht wurde, kann die Klimaanlage durch Öffnen der Einlassventile 24, 25, die zwischen dem Zwischenbehälter 17 und dem Befüllleitungssystem 19, 19' angeordnet sind, befüllt werden. Gegebenenfalls kann das Kältemittel im Zwischenbehälter 17 zuvor noch über eine Heizeinheit 23 erwärmt werden, um einen günstigen Ausgangszustand für den Befüllvorgang zu erreichen. Ein günstiger Ausgangszustand kann beispielsweise eine spez. Enthalpie aufweisen, die über der spez. Enthalpie im kritischen Punkt liegt. Dadurch wird sichergestellt, dass im nachfolgenden (isenthalpen) Ablassschritt ein Phasenzustand auf der oberen Grenzlinie O des p-h-Diagramms (siehe Fig. 3) erreicht wird. Die Heizeinheit 23 kann auch verwendet werden, um den gefüllten Zwischenbehälter nach einer Arbeitsunterbrechung wieder auf eine erforderliche Ausgangstemperatur zu bringen.

Die Befüllung kann dann entweder über das Befüllleitungssystem 19 über den Hochdruckanschluss 3, oder über das Befüllleitungssystem 19' und über den Niederdruckanschluss 2, oder über beide Anschlüsse gleichzeitig erfolgen.

Gegebenenfalls können auch mehrere Zwischenbehälter 17 parallel zueinander angeordnet sein, um größere Mengen an überkritischem Kältemittel bereitstellen zu können. Der Inhalt der mehreren Zwischenbehälter kann dann entweder mit einer gemeinsamen Wägezelle 21 oder über jeweils einzelne Wägezellen gemessen werden und jeder Zwischenbehälter kann mit eigenen Einlassventilen 24, 25 versehen sein.

Der Zwischenbehälter ist mit einem Einlassventil 24 für die flüssige Entnahme und einem Einlassventil 25 für die gasförmige Entnahme versehen. Im überkritischen Bereich und im Gasgebiet kann die Entnahme über beide Einlassventile 24, 25 gleichzeitig erfolgen, wobei die Entnahme im Zweiphasengebiet vorzugsweise nur über das Einlassventil 25 für die gasförmige Entnahme erfolgt. Der Aggregatzustand des Kältemittels im Zwischenbehälter 17 kann über ein Thermometer 27 und ein Druckmessgerät 28 überwacht werden.

Fig. 3 zeigt beispielhaft Verläufe des Aggregatzustandes des Kältemittels während des Befüllens der Klimaanlage 16.

Das Befüllen kann zuerst ausschließlich in einem ersten Teilabschnitt A erfolgen, wobei das Kältemittel im überkritischen Bereich bleibt (überkritische Befüllung). Da überkritisches Kältemittel, insbesondere CO₂, eine Dichte aufweist, die der flüssigen Phase entspricht, aber eine Viskosität der Gasphase hat, strömt in kurzer Zeit eine große Menge an Kältemittel in die Klimaanlage. Es wäre zwar vorteilhaft, die Klimaanlage ausschließlich überkritisch zu befüllen, dies wird jedoch in der Praxis meist durch die gesetzlich geregelten Maximalwerte für Druckbehälter (etwa gemäß der österreichischen Dampfkesselverordnung) verhindert. Bei zu großen Füllmengen der Druckbehälter würde das Klimaservicegerät in höhere Gefahrenklassen fallen, sodass zusätzliche Sicherheitsvorkehrungen erforderlich wären, die das Klimaservicegerät aufwändig und nicht konkurrenzfähig machen würden. Im Allgemeinen wird es daher erforderlich sein, die Befüllung auch unterhalb des kritischen Drucks fortzusetzen, sodass sich die Probleme ergeben, die mit der Bildung einer flüssigen Phase im Zweiphasengebiet einhergehen. Wenn die erforderliche Kühlmittelmenge daher mit der überkritischen Befüllung nicht erreicht wird, wird in einem zweiten Teilabschnitt B das Kältemittel im Bereich des Zweiphasengebiets und/oder des Gasgebiets einströmen gelassen (unterkritische Befüllung).

Bei der überkritischen Befüllung (Teilabschnitt A) wird ausgehend von einem Ausgangszustand 100 im überkritischen Bereich zumindest eines der Einassventile 24, 25 geöffnet, und das Kältemittel strömt in die Klimaanlage 16, wobei sich (bei Vernachlässigung der Wärmeverluste) eine im Wesentlichen isenthalpe Druckverringerung bis zum Punkt 101 ergibt. Der Punkt 101 liegt auf der Höhe des kritischen Drucks KP, wobei sich die Phase des Kältemittels von überkritisch auf gasförmig ändert. Unmittelbar danach gelangt der Aggregatzustand des Kältemittels an die obere Grenzlinie O, die zwischen dem Zweiphasengebiet und dem Gasgebiet des p-h-Diagramms verläuft, wobei dieser Punkt das Auftreten einer flüssigen Phase definiert. Der Zwischenabschnitt zwischen dem Verlassen des Überkritischen Bereichs und dem Eintreten in das Zweiphasengebiet ist in der Praxis sehr kurz und im Allgemeinen vernachlässigbar.

Wie dies eingangs erläutert wurde, kann das Auftreten einer flüssigen Phase im Befüllleitungssystem zu einer (nicht genau ermittelbaren) Änderung der tatsächlichen Kompensationsmenge führen. Dies wirkt sich unmittelbar auf die Toleranzabweichung T, also den Unterscheid zwischen definierter Füllmenge M und tatsächlicher Füllmenge M±T der Klimaanlage aus. Würde man daher das Kältemittel weiter einströmen lassen, käme es bei dem einströmenden Kältemittel zu einem Phasenzustand innerhalb des Zweiphasenbereichs, bei dem es nicht möglich ist festzustellen, wo und in welcher Weise sich eine flüssige Phase im System ausbildet.

Würde man beispielsweise von dem Einlassventil 25 für die gasförmige Entnahme eine große Menge an Kältemittel weiter einströmen lassen, so käme es in oberen Bereich des Zwischenbehälters zu einer starken Abkühlung, damit zu einer Drucksenkung und Bildung einer flüssigen Phase. Das passiert beim Ausströmen sowohl im Behälter, als auch im Schlauch, in den Ventilen etc. Würde man also in einem Zug das System der Klimaanlage befüllen, würde die Phasenänderung irgendwo mittig im Nassdampfgebiet verlaufen, ohne, dass man ermitteln könnte, wo wieviel Kältemittel kondensiert, welche Temperatur punktuell vorliegt, etc.

Erfindungsgemäß wird daher das Einströmen nach dem Erreichen des Zweiphasengebiets kurz unterbrochen, wobei es im Zwischenbehälter 17 zu einer Phasentrennung kommt, bei der das flüssige Kältemittel einerseits wieder verdampft und sich andererseits teilweise im Zwischenbehälter absetzt. Nach der Unterbrechung ist das Kältemittel im oberen Bereich des Zwischenbehälters im Wesentlichen zu 100 % gasförmig und im unteren Bereich zu 100% flüssig. Nimmt man (über das Einlassventil 25 für die gasförmige Entnahme) nun im nächsten Schritt nur einen gasförmigen Anteil heraus, so befindet sich der Aggregatzustand des entnommenen Kältemittels auf der Nassdampfkurve ganz rechts, das heißt an der oberen Grenzlinie O des Zweiphasengebietes. (Umgekehrt würde sich der Aggregatzustand eines über das Einlassventil 24 für die flüssige Entnahme entnommenen Kältemittels auf der Nassdampfkurve ganz links, das heißt an der unteren Grenzlinie des Zweiphasengebietes befinden).

Lässt man daher nun ein wenig Kältemittel über das Einlassventil 25 für die gasförmige Entnahme ausströmen, sinken einerseits der Druck und die Temperatur des Gases und außerdem wird sich ein kleiner Teil flüssige Phase herausbilden. Dieser Entnahmeschritt darf nicht zu langen andauern, damit sich nicht zu viel flüssige Phase im entnommenen Kältemittel bilden kann. In der nachfolgenden Pause erfolgt dann die Phasentrennung, wobei sich der Aggregatzustand des Kältemittels im Bereich des das Einlassventils 25 für die gasförmige Entnahme wieder der oberen Grenzlinie O annähert.

Nach einem Schritt des Einströmenlassens stellt sich im oberen Bereich des Zwischenbehälters ein niedrigerer Druck ein und es bildet sich etwas kondensiertes Kältemittel bei etwas niedrigerer Temperatur. Während der Unterbrechung kommt es zu einem Ausgleich mit dem umliegenden Kältemittel. Der Druck gleicht sich überall aus, das kondensierte Kältemittel wird wieder größtenteils verdampft und ein kleiner Teil sinkt gegebenenfalls auch in die Flüssigkeit ab, während dort gleichzeitig ein Teil verdampft. Die Behältertemperatur ändert sich dabei nur unwesentlich, da die Wand des Zwischenbehälters eine relativ große Masse hat (und damit einen großen Wärmespeicher darstellt), die auf Umgebungstemperatur oder durch das vorherige Aufpumpen etwas darüber liegt. Daher wird auch von der Behälterwand wieder etwas Wärme an das Kältemittel abgegeben, sodass im System die Temperatur und der Druck bei jedem Einströmschritt nur geringfügig sinken wird, die Phasentrennung zwischen Flüssigkeit und Gas sich jedoch sehr schnell wieder einstellt und die Temperatur des Kältemittels somit nicht extrem abfällt.

Dieser Vorgang kann nun schrittweise fortgesetzt werden, wobei sich der erfindungsgemäße stufenförmige Verlauf des Kältemittels im Bereich der oberen Grenzlinie O des Zweiphasengebiets ergibt.

Während der Einströmtakte wird das gegebenenfalls in dem Befüllleitungssystem 19, 19' befindliche Kondensat teilweise verdampft, und falls dieser Effekt nicht ausreicht, wird restliches Kondensat zu einem überwiegenden Teil von der Strömung des Kältemittels mitgerissen, sodass sich im Befüllleitungssystem 19, 19' keine erheblichen Mengen an Kondensat bilden können.

Das Material der Leitungen stellt ein relativ großes Wärmereservoir dar, das dazu beiträgt, die Temperatur des Kältemittels in dem Befüllleitungssystem im Bereich der Raumtemperatur zu halten. Vor allem durch die Wahl sehr kleiner Leitungsquerschnitte kann das Verhältnis von Umgebungsvolumen (d.h. Material des Leitungsrohrs) zum Gasvolumen sehr groß gewählt werden, was die Aufwärmung und das Verdampfen des Kältemittels im Befüllleitungssystem noch begünstigt.

Um das Verfahren zu beschleunigen kann das Kältemittel im Zwischenbehälter während der Unterbrechungen aktiv erwärmt werden, etwa über die in Fig. 2 dargestellte Heizeinheit 23. Damit könnte in jedem Stufenschritt der gesamte Inhalt des Zwischenbehälters 17 in einen gasförmigen Aggregatzustand gebracht werden, gegebenenfalls auch über die Grenzlinie O des Zweiphasengebiets hinaus.

Der stufenförmige Verlauf entlang der oberen Grenzlinie O kann insbesondere durch die Länge der einzelnen Einströmschritte und der dazwischenliegenden Unterbrechungen gesteuert werden.

Bei einem stufenförmigen Verlauf kann es vorteilhaft sein, bei jeder Unterbrechung das Kältemittel im Zwischenbehälter vollständig zu verdampfen und den Aggregatzustand ein wenig bis über die obere Grenzlinie O hinaus in das Gasgebiet hinein zu verlängern.

In einer einfacheren Ausführungsform könnte der Einströmvorgang zumindest im in Fig. 3 dargestellten Teilbereich B, aber gegebenenfalls auch im Teilbereich A, mit einer regelmäßigen Taktung intervallweise unterbrochen werden. Dabei ist es nicht einmal erforderlich, den jeweiligen Aggregatzustand zu ermitteln und komplexe Mess- und Regelungsmittel zu installieren. Beispielsweise könnten, ausgehend vom Ausgangswert 100, beide Einlassventile 24, 25 geöffnet werden, um überkritisches Kältemittel in die evakuierte Klimaanlage einströmen zu lassen, bis der kritische Druck erreicht ist. Dann wird das Einlassventil 24 für die flüssige Entnahme geschlossen, und das Einlassventil 25 für die gasförmige Entnahme wird gemäß der Taktung intervallweise geöffnet. Es wäre auch möglich, die gesamte Befüllung mithilfe einer konstanten Taktung durchzuführen, in diesem Fall wäre es nicht erforderlich, den Aggregatzustand zu überwachen, um den Zeitpunkt des Eintretens in das Zweiphasengebiet zu erkennen.

Die optimalen Taktzeiten sind abhängig von den Abmessungen der jeweiligen Befüllvorrichtung, insbesondere den Leitungsquerschnitten, und können von einem Fachmann durch routinemäßige Versuche ermittelt werden. Bei vom Erfinder durchgeführten Versuchen wurde bei Leitungsdurchmessern von 4 mm bei einem 100 ms Einströmtakt, der bereinigt von der Ansprechdauer des Ventils tatsächlich etwa 70 ms dauerte, je nach Behälterdruck pro Einlasstakt zwischen 8 g (bei ca. 75 bar) und 3g (bei ca. 55 bar) CO₂ abgegeben. Bei kleineren Leitungsquerschnitten würden diese Werte aufgrund des höheren Leitungswiderstands voraussichtlich etwas geringer sein.

Die Taktung kann auch variiert werden, beispielsweise kann nach einer Vorbefüllung von 50-80% der Gesamtmenge die weitere Befüllung mit Einströmtakten von 50-200 ms und Pausen von ca. 5-10 s durchgeführt werden. Die Dauer der Einströmtakte kann entweder gleichbleibend sein, oder sie kann ebenfalls variiert werden, zum Beispiel kann nach der Vorbefüllung mit Einströmtakten von 100 ms begonnen werden, und die Dauer im weiteren Verlauf auf 50 ms gesenkt werden.

Mit der Befüllung aus dem Zweiphasengebiet heraus (d.h. im Teilbereich B), lassen sich zwar verglichen mit der überkritischen Befüllung nur verhältnismäßig geringe Mengen an Kältemittel einfüllen, dies kann aber ausreichen, um eine vollständige Befüllung der Klimaanlage zu gewährleisten, wobei die Füllmenge äußerst genau bemessen werden kann.

Der Befüllvorgang endet (beispielsweise beim Endpunkt 102), sobald die definierte Füllmenge M zuzüglich der Kompensationsmenge K aus dem Zwischenbehälter ausgeströmt ist, was über die Wägezelle 21 ermittelt werden kann. Sollte die Menge am Ende der Intervallweisen Befüllung (Teilbereich B) noch nicht ausreichen, kann der Zwischenbehälter 17 nochmals mit Kältemittel aus dem Vorratsspeicher 18 aufgefüllt werden, um dann die restliche Menge an Kältemittel abfüllen zu können.

### Bezugszeichen:

Klimaservicegerät 1
Niederdruckanschluss 2
Hochdruckanschluss 3
Messgeräte 4, 4'
Anschlussventile 5, 5'
Verbindungsventil 6
Ablass-Rückschlagventil 7
Ablass-Sperrventile 8a, 8b, 8c
Kapillarrohr-Wärmetauscher 9a, 9b, 9c
Ölabscheider 10
Auslass-Sperrventil 11
Ablasseinheit 12
Vakuumpumpe 13
Einström-Rückschlagventil 14
Steuereinheit 15
Klimaanlage 16
Zwischenbehälter 17
Vorratsspeicher 18
Befüllleitungssystem 19, 19'
Befülleinheit 20
Wägezelle 21
Kompressor 22
Heizeinheit 23
Einlassventile 24, 25
Ölabscheider 26

### Parameter und Werte:

definierte Füllmenge M
zulässige Toleranzabweichung T
erster Teilabschnitt A
zweiter Teilabschnitt B
obere Grenzlinie O
Kompensationsmenge K
Volumen Befüllsystem VB
Volumen Klimaanlage VA

## Patentansprüche

1. Verfahren zum Befüllen einer Klimaanlage (16) mit einer definierten Füllmenge (M) an Kältemittel aus einem Vorratsspeicher (18) über ein Befüllleitungssystem (19, 19'), **dadurch gekennzeichnet, dass** das Kältemittel vor dem Befüllen in einem Zwischenbehälter (17) auf einen Ausgangswert (100) konditioniert wird, wobei das Kältemittel ausgehend von diesem Ausgangswert (100) über das Befüllleitungssystem (19, 19') in die evakuierte Klimaanlage (16) einströmen gelassen wird und wobei zumindest bei Erreichen eines Aggregatzustands des Kältemittels im Zweiphasengebiet das weitere Einströmen zum Erreichen einer entlang der oberen Grenzlinie (O) des Zweiphasengebiets im Wesentlichen stufenförmig verlaufenden Änderung des Aggregatzustandes intervallweise unterbrochen wird.

2. Verfahren nach Anspruch 1, **dadurch gekennzeichnet, dass** der Ausgangswert (100) im überkritischen Bereich liegt.

3. Verfahren nach Anspruch 1 oder 2 **dadurch gekennzeichnet, dass** das Kältemittel zumindest nach Erreichen des Zweiphasengebiets über ein Einlassventil (25) für eine gasförmige Entnahme des Kältemittels aus dem Zwischenbehälter (17) in die Klimaanlage (16) einströmen gelassen wird.

4. Verfahren nach einem der Ansprüche 1 bis 3, **dadurch gekennzeichnet, dass** die Dauer der Unterbrechungen eine effektive Phasentrennung im Zwischenbehälter (17) ermöglicht.

5. Verfahren nach einem der Ansprüche 1 bis 4, **dadurch gekennzeichnet, dass** die Unterbrechungen gemäß einer regelmäßigen Taktung erfolgen.

6. Verfahren nach einem der Ansprüche 1 bis 5, **dadurch gekennzeichnet, dass** zur Ermittlung von Unterbrechungsintervallen ein Volumen (VB) des Befüllleitungssystems (19, 19'), ein Innendurchmesser von Leitungen des Befüllleitungssystems (19, 19') ein Volumen (VK) der zu befüllenden Klimaanlage (16), die definierte Füllmenge (M) der Klimaanlage (16), eine Umgebungstemperatur und/oder ein Wert für eine Einfüllgeschwindigkeit berücksichtigt werden.

7. Verfahren nach einem der Ansprüche 1 bis 6, **dadurch gekennzeichnet, dass** das Kältemittel in dem Zwischenbehälter (17) während der Unterbrechungen über eine Heizeinheit (23) erwärmt wird.

8. Vorrichtung zum Befüllen einer Klimaanlage (16) mit einer definierten Füllmenge (M) an Kältemittel aus einem Vorratsspeicher (18) über ein Befüllleitungssystem (19, 19'), wobei die Vorrichtung eine Befülleinheit (20) mit einer Wägezelle (21) zur Ermittlung der abgegebenen Menge (M+K) an Kältemittel aufweist, **dadurch gekennzeichnet, dass** die Vorrichtung eine Steuereinheit (15') zur Steuerung von zumindest einem Einlassventil (24, 25), nach einem Verfahren gemäß Anspruch 1, über welches das Kältemittel beim Befüllen der Klimaanlage (16) strömt, aufweist, wobei über die Steuereinheit (15') das Einströmen des Kältemittels zumindest nach Erreichen eines Aggregatzustands des Kältemittels im Zweiphasengebiet zum Erzielen einer entlang der oberen Grenzlinie (O) des Zweiphasengebiets im Wesentlichen stufenförmig verlaufenden Änderung des Aggregatzustandes intervallweise unterbrechbar ist.

9. Vorrichtung nach Anspruch 8, **dadurch gekennzeichnet, dass** die Befülleinheit (20) einen Kompressor (22) und einen Zwischenbehälter (17) aufweist.

10. Vorrichtung nach Anspruch 9, **dadurch gekennzeichnet, dass** mittels dem Kompressor (22) Kältemittel von dem Vorratsspeicher (18) in den Zwischenbehälter (17) beförderbar ist und mit der Wägezelle (21) die im Zwischenbehälter (17) befindliche Menge an Kältemittel wägbar ist.

11. Vorrichtung nach einem der Ansprüche 8 bis 10, **dadurch gekennzeichnet, dass** die Vorrichtung zumindest ein Einlassventil (25) für eine gasförmige Entnahme von Kältemittel aufweist.

12. Vorrichtung nach einem der Ansprüche einem der Ansprüche 9 bis 11, **dadurch gekennzeichnet, dass** die Vorrichtung eine Vielzahl an gleichartigen oder unterschiedlichen Zwischenbehältern (17) aufweist.

13. Vorrichtung nach einem der Ansprüche 9 bis 12, **dadurch gekennzeichnet, dass** zumindest ein Zwischenbehälter (17) eine Heizeinheit (23) aufweist.

14. Vorrichtung nach Anspruch 13, **dadurch gekennzeichnet, dass** die Heizeinheit (23) auf einer induktiven Erwärmung der Behälterwand des Zwischenbehälters basiert.

15. Klimaservicegerät (1) zur Entleerung und Wiederbefüllung einer Klimaanlage (16) mit Kältemittel, wobei das Klimaservicegerät (1) einen Niederdruckanschluss (2) und/oder einen Hochdruckanschluss (3), eine Ablasseinheit (12), und eine Vorrichtung nach einem der Ansprüche 8 bis 14 aufweist.

## Claims

1. Method for filling an air-conditioning unit (16) with a defined filling amount (M) of refrigerant from a storage reservoir (18) via a filling line system (19, 19'), **characterized in that**, prior to filling, the refrigerant is conditioned in an intermediate container (17) to an initial value (100), the refrigerant being allowed, based on this initial value (100), to flow via the filling line system (19, 19') into the evacuated air-conditioning unit (16) and, at least when the refrigerant has reached a state of aggregation in the two-phase region, further flow being intermittently interrupted for the purpose of reaching a change in the state of aggregation that is substantially stepped along the upper boundary line (O) of the two-phase region.

2. Method according to claim 1, **characterized in that** the initial value (100) is in the supercritical range.

3. Method according to either claim 1 or claim 2, **characterized in that** the refrigerant, at least after reaching the two-phase region, is allowed to flow through an inlet valve (25) for gaseous removal of the refrigerant from the intermediate container (17) into the air-conditioning unit (16).

4. Method according to any of claims 1 to 3, **characterized in that** the duration of the interruptions facilitates effective phase separation in the intermediate container (17).

5. Method according to any of claims 1 to 4, **characterized in that** the interruptions occur at regular intervals.

6. Method according to any of claims 1 to 5, **characterized in that** a volume (VB) of the filling line system (19, 19'), an inner diameter of lines of the filling line system (19, 19'), a volume (VK) of the air-conditioning unit (16) to be filled, the defined filling amount (M) of the air-conditioning unit (16), an ambient temperature and/or a value for a filling rate are taken into account for determining interruption intervals.

7. Method according to any of claims 1 to 6, **characterized in that** the refrigerant is heated in the intermediate container (17) during the interruptions by means of a heating unit (23).

8. Device for filling an air-conditioning unit (16) with a defined filling amount (M) of refrigerant from a storage reservoir (18) by means of a filling line system (19, 19'), the device comprising a filling unit (20) that has a load cell (21) for determining the specified amount (M+K) of refrigerant, **characterized in that** the device comprises a control unit (15') for controlling, in accordance with a method according to claim 1, at least one inlet valve (24, 25) through which the refrigerant flows when filling the air-conditioning unit (16), it being possible, by means of the control unit (15'), to intermittently interrupt the flow of the refrigerant, at least after the refrigerant has reached a state of aggregation in the two-phase region, for the purpose of reaching a change in the state of aggregation that is substantially stepped along the upper boundary line (O) of the two-phase region.

9. Device according to claim 8, **characterized in that** the filling unit (20) comprises a compressor (22) and an intermediate container (17).

10. Device according to claim 9, **characterized in that** refrigerant can be conveyed from the storage reservoir (18) into the intermediate container (17) by means of the compressor (22) and the amount of refrigerant in the intermediate container (17) can be weighed by means of the load cell (21).

11. Device according to any of claims 8 to 10, **characterized in that** the device comprises at least one inlet valve (25) for gaseous removal of refrigerant.

12. Device according to any of claims 9 to 11, **characterized in that** the device comprises a plurality of similar or different intermediate containers (17).

13. Device according to any of claims 9 to 12, **characterized in that** at least one intermediate container (17) comprises a heating unit (23).

14. Device according to claim 13, **characterized in that** the heating unit (23) is based on inductively heating the container wall of the intermediate container.

15. Air-conditioning service apparatus (1) for emptying and refilling an air-conditioning unit (16) with refrigerant, the air-conditioning service apparatus (1) comprising a low-pressure connection (2) and/or a high-pressure connection (3), a drain unit (12), and a device according to any of claims 8 to 14.

## Revendications

1. Procédure de remplissage d'un système de climatisation (16) avec une quantité de remplissage (M) définie de fluide frigorigène depuis un réservoir de stockage (18) via un système de tube de remplissage (19, 19'), **caractérisée par le fait qu'**avant de remplir un réservoir intermédiaire (17), le fluide frigorigène est conditionné à une valeur initiale (100) et celui-ci est injecté à partir de cette valeur initiale (100) via le système de tube de remplissage (19, 19') dans le système de climatisation (16) évacué et où au moins lors de l'atteinte d'une forme physique du fluide frigorigène dans la zone à deux phases, la poursuite d'injection pour obtenir une modification de la forme physique le long de la ligne de limite supérieure (O) s'étendant essentiellement de manière étagée est interrompue de manière intermittente.

2. Procédure selon l'exigence 1, **caractérisée par le fait que** la valeur initiale (100) se trouve dans la zone hypercritique.

3. Procédure selon l'exigence 1 ou 2, **caractérisée par le fait que** le fluide frigorigène au moins après l'atteinte de la zone à deux phases est injecté via une vanne d'entrée (25) pour un prélèvement sous forme de gaz du fluide frigorigène à partir du réservoir intermédiaire (17) dans le système de climatisation (16).

4. Procédure selon une des exigences 1 à 3, **caractérisée par le fait que** la durée des interruptions permet une séparation effective des phases dans le réservoir intermédiaire (17).

5. Procédure selon une des exigences 1 à 4, **caractérisée par le fait que** les interruptions ont lieu selon un cadençage régulier.

6. Procédure selon une des exigences 1 à 5, **caractérisée par le fait que** pour déterminer les intervalles d'interruption le volume (VB) du système de tube de remplissage (19, 19'), le diamètre interne des tubes du système de tube de remplissage (19, 19') le volume (VK) du système de climatisation (16) à remplir, la quantité de remplissage définie (M) du système de climatisation (16), la température ambiante et/ou la valeur de la vitesse de remplissage doivent être pris en compte.

7. Procédure selon une des exigences 1 à 6, **caractérisée par le fait que** le fluide frigorigène dans le réservoir intermédiaire (17) est réchauffé par une unité chauffante (23) lors de l'interruption.

8. Dispositif de remplissage d'un système de climatisation (16) avec une quantité de remplissage (M) définie de fluide frigorigène depuis un réservoir de stockage (18) via un système de tube de remplissage (19, 19'), où le dispositif présente une unité de remplissage (20) avec un capteur de pesage (21) pour déterminer la valeur donnée (M+K) en fluide frigorigène, **caractérisé par le fait que** le dispositif présente une unité de commande (15') pour contrôler au moins une vanne d'entrée (24, 25), selon une procédure conformément à l'exigence 1 via laquelle le fluide frigorigène circule lors du remplissage du système de climatisation (16), où via l'unité de commande (15') l'afflux du fluide frigorigène peut être interrompu de manière intermittente au moins lors de l'atteinte d'une forme physique du fluide frigorigène dans la zone à deux phases pour parvenir le long de la ligne de limite supérieure (O) de la zone à deux phases s'étendant essentiellement de manière étagée.

9. Dispositif selon l'exigence 8, **caractérisé par le fait que** l'unité de remplissage (20) dispose d'un compresseur (22) et d'un réservoir intermédiaire (17).

10. Dispositif selon l'exigence 9, **caractérisé par le fait que** le fluide frigorigène est transportable avec le compresseur (22) depuis le réservoir de stockage (18) vers le réservoir intermédiaire (17) et que la quantité de fluide frigorigène se trouvant dans le réservoir intermédiaire (17) peut être pesée avec le capteur de pesage (21).

11. Dispositif selon une des exigences 8 à 10, **caractérisé par le fait que** le dispositif présente au moins une vanne d'entrée (25) pour un prélèvement sous forme de gaz de fluide frigorigène.

12. Dispositif selon une des exigences 9 à 11, **caractérisé par le fait que** le dispositif présente une multitude de réservoirs intermédiaires (17) du même type ou différents.

13. Dispositif selon une des exigences 9 à 12, **caractérisé par le fait qu'**au moins un réservoir intermédiaire (17) présente une unité chauffante (23).

14. Dispositif selon l'exigence 13, **caractérisé par le fait que** l'unité chauffante (23) se base sur un réchauffement inductif de la paroi du réservoir intermédiaire.

15. Station de service pour climatisation (1) pour la vidange et le re-remplissage d'un système de climatisation (16) avec du fluide frigorigène, où la station de service pour climatisation (1) présente un raccord basse pression (2) et/ou un raccord haute pression (3), une unité de sortie (12) et un dispositif selon une des exigences 8 à 14.
